(19) Europäisches Patentamt
European Patent Office
Office européen des brevets

(11) **EP 2 837 924 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(51) Int Cl.:
*G01M 3/28* *(2006.01)*     *G01M 3/32* *(2006.01)*

(21) Anmeldenummer: **14178841.4**

(22) Anmeldetag: **29.07.2014**

(54) **Wärmeträgerölanlage mit Leckageerkennung sowie Verfahren zur Leckageerkennung an einer Wärmeträgerölanlage**

Heat transfer oil assembly with leakage detection and method for detecting leakage on a heat transfer oil assembly

Installation à huile caloporteuse équipée d'une détection de fuites, ainsi que procédé de détection de fuites sur une installation à huile caloporteuse

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2013 DE 102013216301**

(43) Veröffentlichungstag der Anmeldung:
**18.02.2015 Patentblatt 2015/08**

(73) Patentinhaber: **Ness Wärmetechnik GmbH**
**73630 Remshalden (DE)**

(72) Erfinder: **Ness, Dr. Andreas J.**
**73614 Schorndorf (DE)**

(74) Vertreter: **Kohler Schmid Möbus Patentanwälte**
**Partnerschaftsgesellschaft mbB**
**Gropiusplatz 10**
**70563 Stuttgart (DE)**

(56) Entgegenhaltungen:
DE-A1-102009 017 403    DE-A1-102009 048 062
DE-B3-102008 039 563    US-A- 5 686 658
US-A1- 2007 028 674

EP 2 837 924 B1

**Beschreibung**

Die Erfindung betrifft eine Wärmeträgerölanlage, die Wärmeträgeröl enthält, das bei einer ersten Temperatur und zu einem ersten Zeitpunkt ein momentanes Bezugsvolumen bildet und das bei Betrieb der Wärmeträgerölanlage bei einer zweiten Temperatur und zu einem gegenüber dem ersten Zeitpunkt um einen Differenzzeitraum zeitlich versetzten zweiten Zeitpunkt ein tatsächliches momentanes Betriebsvolumen bildet.

Die Erfindung betrifft des Weiteren ein Verfahren zur Leckageerkennung an einer derartigen Wärmeträgerölanlage.

Wärmeträgerölanlagen sind aus einer Vielzahl industrieller Anwendungen bekannt. Druckschriftlich offenbart ist eine Wärmeträgerölanlage der eingangs genannten Art beispielsweise in DE 10 2010 043 478 A1.

An den bekannten Wärmeträgerölanlagen wird einem oder mehreren Wärmeverbrauchern, beispielsweise Spanplattenpressen oder Chemiereaktoren, mittels Wärmeträgeröl, das auch als "Thermoöl" oder "Thermalöl" bezeichnet wird, Wärme zugeführt. Als Wärmeträgeröl verwendet werden vorzugsweise Mineralöle und synthetische Öle. Ein Ölerhitzer der Wärmeträgerölanlage erhitzt das Wärmeträgeröl auf Vorlauftemperaturen, die in der Größenordnung von 300°C bis 400°C liegen können. Entsprechend heiß sind die Komponenten einer Wärmeträgerölanlage.

Kommt es an einer Wärmeträgerölanlage beispielsweise in Folge einer Havarie zu Leckagen und tritt Wärmeträgeröl aus, so besteht die Gefahr, dass sich das Wärmeträgeröl entzündet. In geschlossenen Behältern oder Räumen kann es auch zu Explosionen kommen. Wärmeträgerölanlagen enthalten häufig ein Ölvolumen von über 100 m$^3$. Tritt aufgrund einer Leckage nur 1% des Ölvolumens, d.h. 1m$^3$ Wärmeträgeröl, pro Stunde aus, so kann dies eine Feuerungsleistung von rund 10 MW in einem Brandherd bedeuten.

Je nach Beschaffenheit des Wärmeträgeröls, etwa im Falle von Wärmeträgeröl mit wassergefährdenden Inhaltsstoffen, besteht zudem die Gefahr von Umweltschäden, beispielsweise dadurch, dass das austretende Wärmeträgeröl in das Oberflächenwasser oder das Grundwasser gelangt.

Weiterer Stand der Technik ist bekannt aus DE 10 2009 048 062 A1, US 5,686,658 A und US 2007/028674 A1.

DE 10 2009 048 062 A1 betrifft eine Wärmeträgerölanlage sowie ein Verfahren zum Betreiben einer Wärmeträgerölanlage. Wärmeträgeröl zirkuliert in einem Öl-Versorgungskreislauf mit einer Pumpstation, einem Öl-Erhitzer und einem Wärmeverbraucher. Parallel zu dem Wärmeverbraucher ist ein Leichtsiederabscheider geschaltet, der dazu dient, leichtflüchtige Ölbestandteile aus dem in dem Öl-Versorgungskreislauf zirkulierenden Wärmeträgeröl zu entfernen.

US 5,686,658 A betrifft die quantitative Bestimmung eines an einem Öltank infolge Leckage auftretenden Ölverlusts. Zu diesem Zweck wird der Pegelstand in einem in dem Öltank platzierten Standrohr kontinuierlich gemessen. Durch Multiplizieren einer gemessenen Änderung des Pegelstands mit der Grundfläche des Öltanks wird der aufgetretene Leckageverlust in erster Näherung berechnet. Zur Erhöhung der Genauigkeit des Ergebnisses der auf der Grundlage der Pegelstandsmessung durchgeführten Berechnung werden in dem System aufgetretene Temperaturänderungen gegebenenfalls berücksichtigt. In diesem Zusammenhang erfasst werden die Temperatur an einer Wand des Öltanks, die Temperatur des im Innern des Öltanks und dabei außerhalb des Standrohrs anstehenden Öls, die Temperatur des Öls in dem Standrohr und die Temperatur des Öls in einer an dem Standrohr vorgesehenen Messkammer. Das Ergebnis der Temperaturmessung wird genutzt, um den Temperatureinfluss aus dem allein anhand der Pegelstandsmessung ermittelten Leckageverlust herauszurechnen und dadurch den Leckageverlust exakt zu quantifizieren.

US 2007/0028674 A1 offenbart eine Vorrichtung und ein Verfahren zur Leckageerkennung an Hydrauliksystemen mit einem Hydrauliktank und einer daran angeschlossenen Hydraulikleitung. Dabei wird fortlaufend der Pegelstand der Hydraulikflüssigkeit in dem Hydrauliktank gemessen. Der bei einer aktuellen Messung ermittelte Pegelstand wird mit dem Pegelstand einer unmittelbar vorausgegangenen Messung verglichen. Ist der Pegelstand der aktuellen Messung niedriger als der Pegelstand der vorausgegangenen Messung, so wird von dem Vorliegen einer Leckage ausgegangen. Ist der aktuell gemessene Pegelstand höher als der Pegelstand der vorausgegangenen Messung, so werden die Temperatur der Hydraulikflüssigkeit bei der aktuellen Messung und die Temperatur der Hydraulikflüssigkeit bei der vorausgegangenen Messung berücksichtigt, dergestalt, dass der bei der aktuellen Messung tatsächlich ermittelte Pegelstand um den Einfluss der Temperaturdifferenz zwischen der Temperatur bei der aktuellen Messung und der Temperatur bei der vorausgegangenen Messung korrigiert wird. Der korrigierte Pegelstand der aktuellen Messung wird schließlich mit dem Pegelstand der vorausgegangenen Messung verglichen.

Die Aufgabe der vorliegenden Erfindung besteht darin, sowohl vorrichtungs- als auch verfahrensbezogen ein zuverlässiges Erkennen von Leckagen an Wärmeträgerölanlagen zu ermöglichen, um gegebenenfalls die notwendigen Sicherungsmaßnahmen einleiten zu können.

Erfindungsgemäß gelöst wird diese Aufgabe durch die Wärmeträgerölanlage nach Patentanspruch 1 und durch das Verfahren zur Leckageerkennung nach Patentanspruch 9.

Das in einer Wärmeträgerölanlage zirkulierende Wärmeträgeröl ist starken Temperaturschwankungen unterworfen. Bei steigender Temperatur dehnt sich das Wärmeträgeröl aus, bei fallender Temperatur verringert sich sein Volumen. Eine Leckageerkennung allein durch Beobachtung des Füllstandes einer Wärmeträgerölanlage ist folglich nicht möglich. Fällt beispielsweise in einem Anlagenteil die Temperatur, so verringert sich das Wärmeträgerölvolumen.

Diese Volumenabnahme äußert sich unmittelbar in einem Sinken des Füllstandes der Wärmeträgerölanlage. Eine Abnahme des in einer Wärmeträgerölanlage enthaltenen Wärmeträgerölvolumens aufgrund eines Temperaturrückgangs ist nicht ohne weiteres von einer durch eine Leckage verursachten Volumenabnahme zu unterscheiden. Eine Volumenabnahme in Folge eines Temperaturrückgangs kann ein Vielfaches einer Volumenabnahme in Folge einer Leckage der Wärmeträgerölanlage ausmachen.

Auch eine Leckageerkennung durch Vergleich der in einen Anlagenteil der Wärmeträgerölanlage einströmenden Wärmeträgermenge mit der aus demselben Anlagenteil ausströmenden Wärmeträgermenge ist nicht praktikabel. In der Regel bewegen sich die Volumenströme des Wärmeträgeröls in Wärmeträgerölanlagen in der Größenordnung von mehreren Hundert Kubikmetern pro Stunde. Der übliche Messfehler bei Volumenstrommessungen heißer Medien mit Umrechnung auf Massenströme ist größer als ein Prozent. Bei der Bildung der Differenz zwischen dem einströmenden Wärmeträger-Massenstrom und dem ausströmenden Wärmeträger-Massenstrom addieren sich die Messfehler, sodass das Ergebnis der Differenzbildung letztlich keine zuverlässige Aussage über das Vorhandensein einer Leckage oder über Leckagefreiheit der Wärmeträgerölanlage zulässt.

Im Gegensatz dazu bietet das erfindungsgemäße Konzept die Möglichkeit, Leckagen in einer Wärmeträgerölanlage zuverlässig zu erkennen.

Erfindungsgemäß wird eine Leckageerkennung durch Vergleich einer durch Messung bestimmten und über einen Differenzzeitraum zwischen einem ersten und einem zweiten Zeitpunkt auftretenden tatsächlichen Volumenänderung des in der Anlage enthaltenen Wärmeträgeröls mit einer berechneten und somit theoretischen Volumenänderung des Wärmeträgeröls über der Zeit realisiert. Die Temperatur des Wärmeträgeröls am Ende des Differenzzeitraums kann von der Temperatur des Wärmeträgeröls zu Beginn des Differenzzeitraums verschieden sein, aber auch mit ihr übereinstimmen. Die Verfahrensschritte des erfindungsgemäßen Verfahrens werden so weit wie möglich numerisch und vorzugsweise mittels einer speicherprogrammierbaren Steuerung der Wärmeträgerölanlage durchgeführt, in welche die Komponenten der erfindungsgemäßen Vorrichtung zur Leckageerkennung integriert sind.

Zum einen wird im Falle der Erfindung durch Messung die tatsächliche Volumenänderung zwischen einem zu Beginn des Differenzzeitraums bei einer ersten Temperatur vorliegenden Bezugsvolumen des in der Wärmeträgerölanlage enthaltenen Wärmeträgeröls und einem am Ende des Differenzzeitraums bei einer zweiten Temperatur tatsächlich vorliegenden momentanen Betriebsvolumen des in der Wärmeträgerölanlage enthaltenen Wärmeträgeröls bestimmt. Durch die erfindungsgemäße Messung lässt sich die tatsächliche Volumenänderung des Wärmeträgeröls während des Differenzzeitraums einfach und zuverlässig ermitteln. Die Bestimmung der tatsächlichen Volumenänderung des Wärmeträgeröls während des Differenzzeitraums erfolgt mittels einer Volumenstrom-Messeinrichtung, welche die tatsächliche Volumenänderung des in der Wärmeträgerölanlage enthaltenen Wärmeträgeröls durch Volumenstrommessung in einer Leitung der Wärmeträgerölanlage bestimmt, in welcher aufgrund der Temperaturdifferenz zwischen den Temperaturen des Wärmeträgeröls am Anfang und am Ende des Differenzzeitraums Wärmeträgeröl während des Differenzzeitraums strömen kann. Diese Maßnahme bietet den Vorteil, dass die über den Differenzzeitraum durchgeführte Messung direkt die tatsächliche Volumenänderung des in der Wärmeträgerölanlage enthaltenen Wärmeträgeröls liefert und an einem Volumenstrom durchgeführt wird, der zumindest größenordnungsmäßig bekannt ist. Aufgrund des letztgenannten Umstandes kann eine an die Messaufgabe optimal angepasste Messeinrichtung eingesetzt werden. Der Messfehler lässt sich dadurch minimieren. Als Leitung der Wärmeträgerölanlage, in welcher die Volumenstrom-Messeinrichtung die tatsächliche Volumenänderung des in der Wärmeträgerölanlage enthaltenen Wärmeträgeröls misst, wird vorzugsweise eine zu einem Ausdehnungsgefäß der Wärmeträgerölanlage führende Ausdehnungsleitung genutzt (Patentanspruch 5). Üblicherweise verbindet eine derartige Ausdehnungsleitung den heißen Wärmeträgerkreislauf mit einem Ausdehnungsgefäß der Wärmeträgerölanlage.

Entsprechend einfach und zuverlässig gestaltet sich die erfindungsgemäße Ermittlung der Soll-Volumenänderung des Wärmeträgeröls während des Differenzzeitraums. Zu diesem Zweck wird mit Hilfe einer Temperatur-Messeinrichtung die Temperaturdifferenz zwischen der Temperatur des Wärmeträgeröls zu Beginn des Differenzzeitraums und der Temperatur des Wärmeträgeröls am Ende des Differenzzeitraums gemessen. Das Wärmeträgeröl und dessen Temperaturverhalten, insbesondere der Volumenausdehnungskoeffizient des Wärmeträgeröls, sind bekannt. Ist außerdem das momentane Bezugsvolumen des in der Wärmeträgerölanlage enthaltenen Wärmeträgeröls beispielsweise aufgrund einer Messung bekannt, so kann anhand der damit verfügbaren Informationen die an die Temperatur-Messeinrichtung angebundene Soll-Betriebsvolumen-Berechnungseinrichtung das momentane Soll-Betriebsvolumen des Wärmeträgeröls am Ende des Differenzzeitraums bestimmen, also dasjenige Volumen, welches das in der Wärmeträgerölanlage enthaltene Wärmeträgeröl aufgrund der gemessenen Temperaturdifferenz am Ende des Differenzzeitraums als momentanes Betriebsvofumen aufweisen müsste. Das auf diese Art und Weise ermittelte momentane Soll-Betriebsvolumen wird in der erfindungsgemäßen Soll-Betriebsvolumen-Vergleichseinrichtung mit dem momentanen Bezugsvolumen des Wärmeträgeröls verglichen. Die sich aufgrund des Vergleichs ergebende Soll-Volumenänderung des Wärmeträgeröls für den Differenzzeitraum wird in der Volumenänderungs-Vergleichseinrichtung der erfindungsgemäßen Wärmeträgerölanlage mit der gemessenen tatsächlichen Volumenänderung des in der Wärmeträgerölanlage enthaltenen Wärmeträgeröls verglichen.

Unterschiedliche Vergleichsergebnisse sind denkbar.

Zeigt der Vergleich der tatsächlichen Volumenänderung mit der Soll-Volumenänderung des Wärmeträgeröls, dass beide Größen miteinander übereinstimmen, so indiziert dies eine Leckagefreiheit der Wärmeträgerölanlage. Ist die tatsächliche Volumenänderung des Wärmeträgeröls kleiner als die Soll-Volumenänderung des Wärmeträgeröls, so weist dies auf einen Verlust von Wärmeträgeröl und somit auf eine Leckage der Wärmeträgerölanlage hin. Auf eine Leckage der Wärmeträgerölanlage ist auch dann zu schließen, wenn die tatsächliche Volumenänderung des Wärmeträgeröls größer ist als dessen Soll-Volumenänderung, am Ende des Differenzzeitraums also das tatsächliche momentane Betriebsvolumen des Wärmeträgeröls das momentane Soll-Betriebsvolumen des Wärmeträgeröls übersteigt. In diesem Fall hat sich das Volumen des in der Wärmeträgerölanlage enthaltenen Wärmeträgeröls durch den aufgrund einer Leckage möglichen Zustrom von Fremdstoffen irregulär vergrößert.

In jedem der genannten Fälle stellt die erfindungsgemäße Auswerteeinrichtung eine Leckage der Wärmeträgerölanlage fest. Auf der Grundlage dieser Feststellung können die erforderlichen Sicherungsmaßnahmen eingeleitet werden.

Besondere Ausführungsarten der in den unabhängigen Patentansprüchen beschriebenen Erfindung ergeben sich aus den abhängigen Patentansprüchen 2 bis 8.

Im Falle der Erfindungsbauart nach Patentanspruch 2 stellt die Auswerteeinrichtung eine Leckage der Wärmeträgerölanlage nicht bereits dann fest, wenn die tatsächliche Volumenänderung und die Soll-Volumenänderung des Wärmeträgeröls nicht identisch miteinander übereinstimmen. Von einer Leckage der Wärmeträgerölanlage wird vielmehr erst dann ausgegangen, wenn die Abweichung der tatsächlichen Volumenänderung von der Soll-Volumenänderung des Wärmeträgeröls einen vorgegebenen und von null verschiedenen Abweichungs-Grenzwert überschreitet. Auf diese Art und Weise wird berücksichtigt, dass Messfehler und Rechenungenauigkeiten das Ergebnis der Bestimmung der tatsächlichen Volumenänderung und der Soll-Volumenänderung des Wärmeträgeröls verfälschen können. Um welchen Betrag die tatsächliche Volumenänderung maximal kleiner oder größer sein darf als die Soll-Volumenänderung, ohne dass eine Leckagemeldung erfolgt, wird empirisch und bezogen auf die jeweils betroffene Wärmeträgerölanlage festgelegt.

Auf die Feststellung einer Leckage der Wärmeträgerölanlage kann erfindungsgemäß auf vielfältige Weise reagiert werden. Denkbar ist beispielsweise die Erzeugung eines Alarmsignals, durch welches das Bedienungspersonal auf den irregulären Zustand der Wärmeträgerölanlage hingewiesen wird.

In bevorzugter Ausgestaltung der Erfindung ist ausweislich Patentanspruch 3 vorgesehen, dass die Auswerteeinrichtung der Vorrichtung zur Leckageerkennung mit einer Steuereinrichtung der Wärmeträgerölanlage in Verbindung steht und dass die Wärmeträgerölanlage mittels der Steuereinrichtung gegebenenfalls leckagespezifisch geregelt wird. Auf diese Art und Weise werden aus der Feststellung einer Leckage der Wärmeträgerölanlage unmittelbar die notwendigen Konsequenzen für den Betrieb der Wärmeträgerölanlage gezogen.

Gemäß Patentanspruch 4 wird bei Feststellung einer Leckage der Wärmeträgerölanlage die Wärmeträgerölversorgung der Wärmeträgerölanlage leckagespezifisch angesteuert, insbesondere abgeschaltet.

Denkbar ist eine je nach Größe der festgestellten Leckage abgestufte Reaktion auf die Feststellung einer Leckage der Wärmeträgerölanlage. Treten beispielsweise große Leckageverluste an Wärmeträgeröl auf, so empfiehlt es sich, die Wärmeträgerölanlage notfallartig stillzusetzen. Bei kleineren Leckageverlusten an Wärmeträgeröl kann es vertretbar sein, die Wärmeträgerölanlage kontrolliert herunterzufahren.

Ergänzend zu der Messung der tatsächlichen Volumenänderung des in der Wärmeträgerölanlage enthaltenen Wärmeträgeröls durch Volumenstrommessung wird im Falle der Erfindungsbauarten nach den Patentansprüchen 6 und 7 wenigstens eine Füllstandsmessung zur Bestimmung der tatsächlichen Volumenänderung des Wärmeträgeröls durchgeführt. Durch Füllstandsmessung bestimmt wird jedenfalls das tatsächliche momentane Betriebsvolumen des Wärmeträgeröls am Ende des Differenzzeitraums. Zusätzlich kann auch das zu Beginn des Differenzzeitraums vorliegende Bezugsvolumen des Wärmeträgeröls durch Füllstandsmessung ermittelt werden. Zuverlässige Einrichtungen zur Füllstandsmessung und -anzeige sind insbesondere für Ausdehnungsgefäße von Wärmeträgerölanlagen allgemein verfügbar. Messfehler und Rechenungenauigkeiten sind gering. Bevorzugtermaßen wird daher die Füllstandsmessung in einem Ausdehnungsgefäß der Wärmeträgerölanlage vorgenommen. Verfügt die Wärmeträgerölanlage über eine speicherprogrammierbare Steuerung, so kann die Bestimmung der tatsächlichen Volumenänderung des Wärmeträgeröls in die speicherprogrammierbare Steuerung integriert werden.

Eine erfindungsgemäß bevorzugte Möglichkeit zur Bestimmung der Soll-Volumenänderung des Wärmeträgeröls für den Differenzzeitraum ist in Patentanspruch 8 beschrieben. Diese Erfindungsbauart ist nach dem Prinzip der Finite-Elemente-Methode in mehrere Anlagenteile unterteilt, von denen jeder eine Temperatur-Messeinheit der Temperatur-Messeinrichtung, eine Soll-Betriebsvolumen-Berechnungseinheit der Soll-Betriebsvolumen-Berechnungseinrichtung und eine Soll-Betriebsvolumen-Vergleichseinheit der Soll-Betriebsvolumen-Vergleichseinrichtung aufweist. Für jeden der Anlagenteile wird die Soll-Volumenänderung des Wärmeträgeröls für den Differenzzeitraum ermittelt. Die einzelnen Soll-Volumenänderungen der Anlagenteile werden schließlich mittels einer Additionseinrichtung zu der Soll-Volumenänderung der gesamten Wärmeträgerölanlage addiert.

Nachfolgend wird die Erfindung anhand einer beispielhaften schematischen Darstellung näher erläutert, die ein Schaltbild einer Wärmeträgerölanlage mit Leckageerkennung zeigt.

Ausweislich der Darstellung umfasst eine Wärmeträgerölanlage 1 einen Wärmeträger-Versorgungskreislauf 2, in welchem als Wärmeträger herkömmliches Wärmeträgeröl, im dargestellten Beispielsfall Mineralöl, zirkuliert. Der Wärmeträgerstrom in dem Wärmeträger-Versorgungskreislauf 2 wird mittels einer Wärmeträgerpumpe 3 erzeugt. Die Wärmeträgerpumpe 3 fördert das Wärmeträgeröl zu einem mit einem Brenner 4 versehenen Erhitzer 5. Der Erhitzer 5 kann mit fossilen Brennstoffen oder mit Produktionsreststoffen beheizt werden. Er erhitzt das Wärmeträgeröl in dem dargestellten Beispielsfall auf eine Vorlauftemperatur, die zwischen 280°C und 350°C liegt.

Mit dieser Vorlauftemperatur gelangt das Wärmeträgeröl über eine Vorlaufleitung 6 zu einem ersten Wärmeverbraucher 7 und zu einem parallel dazu geschalteten zweiten Wärmeverbraucher 8. Bei den Wärmeverbrauchern 7, 8 handelt es sich vorliegend um Spanplattenpressen. Als Wärmeverbraucher denkbar sind beispielsweise auch Chemiereaktoren.

An den Wärmeverbrauchern 7, 8 wird dem Wärmeträgeröl Wärme entzogen. Die Temperatur des Wärmeträgeröls sinkt infolgedessen auf eine Rücklauftemperatur von 250°C bis 300°C. Mit dieser Rücklauftemperatur wird das Wärmeträgeröl mittels der Wärmeträgerpumpe 3 über eine Rücklaufleitung 9 zu dem Erhitzer 5 zurückgefördert, wo das Wärmeträgeröl erneut auf seine Vorlauftemperatur erhitzt wird.

Zwischen den Wärmeverbrauchern 7, 8 und der Wärmeträgerpumpe 3 zweigt von der Rücklaufleitung 9 eine Ausdehnungsleitung 10 ab, welche den heißen Wärmeträger-Versorgungskreislauf 2 mit einem Ausdehnungsgefäß 11 verbindet. An der Ausdehnungsleitung 10 ist zwischen dem Wärmeträger-Versorgungskreislauf 2 und dem Ausdehnungsgefäß 11 eine Volumenstrom-Messeinrichtung 12 vorgesehen.

Der Wärmeträger-Versorgungskreislauf 2 ist in dem dargestellten Beispielsfall in Anlagenteile in Form von insgesamt fünf Teilsystemen unterteilt. Ein Teilsystem I umfasst den Brenner 4 mit dem Erhitzer 5, ein Teilsystem II die Vorlaufleitung 6, ein Teilsystem III den ersten Wärmeverbraucher 7, ein Teilsystem IV den zweiten Wärmeverbraucher 8 und ein Teilsystem V die Rücklaufleitung 9 mit der Wärmeträgerpumpe 3. In jedem der Teilsysteme I, II, III, IV, V herrscht zu einem bestimmten Zeitpunkt eine im Wesentlichen einheitliche lokale Betriebstemperatur des Wärmeträgeröls.

Zur Messung der jeweiligen lokalen Betriebstemperaturen des Wärmeträgeröls weist das Teilsystem I eine Temperatur-Messeinheit 13, das Teilsystem II eine Temperatur-Messeinheit 14, das Teilsystem III eine Temperatur-Messeinheit 15, das Teilsystem IV eine Temperatur-Messeinheit 16 und das Teilsystem V eine Temperatur-Messeinheit 17 auf. Bei den Temperatur-Messeinheiten 13, 14, 15, 16, 17 handelt es sich um Temperatursensoren herkömmlicher Bauart.

Sämtliche Temperatur-Messeinheiten 13, 14, 15, 16, 17 übermitteln ihre Temperatur-Messwerte an eine Temperaturberechnungseinrichtung 18. Bei der Temperaturberechnungseinrichtung 18 handelt es sich um einen Baustein einer speicherprogrammierbaren Steuerung (SPS) 19 der Wärmeträgerölanlage 1. Gemeinsam mit den Temperatur-Messeinheiten 13, 14, 15, 16, 17 bildet die Temperaturberechnungseinrichtung 18 eine Temperatur-Messeinrichtung 20.

Mittels der Temperatur-Messeinrichtung 20 werden fortlaufend die lokalen Betriebstemperaturen des Wärmeträgeröls in den Teilsystemen I, II, III, IV, V der Wärmeträgerölanlage 1, im Einzelnen in den betreffenden Teilen des Wärmeträger-Versorgungskreislauf 2, bestimmt.

Jede der Temperatur-Messeinheiten 13, 14, 15, 16, 17 ist über die Temperaturberechnungseinrichtung 18 an eine eigene Soll-Betriebsvolumen-Berechnungseinheit einer numerischen Soll-Betriebsvolumen-Berechnungseinrichtung 21 der SPS 19 angebunden. Jeder der Soll-Betriebsvolumen-Berechnungseinheiten wiederum ist eine eigene Soll-Betriebsvolumen-Vergleichseinheit einer numerischen Soll-Betriebsvolumen-Vergleichseinrichtung 23 der SPS 19 zugeordnet. Gemeinsam sind die Soll-Betriebsvolumen-Vergleichseinheiten der Teilsysteme I, II, III, IV, V an eine Additionseinrichtung einer Volumenänderungs-Vergleichseinrichtung 24 angebunden.

Von jeder der Temperatur-Messeinheiten 13, 14, 15, 16, 17 wird für das jeweilige Teilsystem I, II, III, IV, V zu einem ersten Zeitpunkt eine erste Temperatur $T_1$ des in dem betreffenden Teilsystem I, II, III, IV, V enthaltenen Wärmeträgerölvolumens und zu einem zweiten Zeitpunkt, der auf den ersten Zeitpunkt nach einem Differenzzeitraum folgt, eine zweite Temperatur $T_2$ des in dem betreffenden Teilsystem I, II, III, IV, V enthaltenen Wärmeträgerölvolumens gemessen. Aus der Temperatur $T_1$ und aus der Temperatur $T_2$ bestimmt die Temperaturberechnungseinrichtung 18 der Temperatur-Messeinrichtung (20) für jedes der Teilsysteme I, II, III, IV, V eine zwischen diesen Temperaturen bestehende Temperaturdifferenz $\Delta T_I$, $\Delta T_{II}$, $\Delta T_{III}$, $\Delta T_{IV}$, $\Delta T_V$.

Das in den Teilsystemen I, II, III, IV, V zu Beginn des Differenzzeitraums jeweils enthaltene und die Temperatur $T_1$ aufweisende Wärmeträgerölvolumen bildet ein momentanes Bezugsvolumen $V_{rI}$, $V_{rII}$, $V_{rIII}$, $V_{rIV}$, $V_{rV}$ und ist beispielsweise als Füllvolumen des betreffenden Teilsystems I, II, III, IV, V bei einer bestimmten Temperatur bekannt. In guter Näherung ergibt sich ein momentanes Bezugsvolumen $V_r$ der gesamten Wärmeträgerölanlage 1 zu Beginn des Differenzzeitraums als Summe der momentanen Bezugsvolumina $V_{rI}$, $V_{rII}$, $V_{rI}$, $V_{rIV}$, $V_{rV}$ der einzelnen Teilsysteme I, II, III, IV, V.

Die Soll-Betriebsvolumen-Berechnungseinheiten der Soll-Betriebsvolumen-Berechnungseinrichtung 21 ermitteln für jedes der Teilsysteme I, II, III, IV, V ausgehend von dem jeweiligen momentanen Bezugsvolumen $V_{rI}$, $V_{rII}$, $V_{rIII}$,

$V_{rIV}$, $V_{rV}$ anhand der von der Temperatur-Messeinrichtung 20 bestimmten Temperaturdifferenzen $\Delta T_I$, $\Delta T_{II}$, $\Delta T_{III}$, $\Delta T_{IV}$, $\Delta T_V$ und anhand von in einem Datenspeicher 22 der SPS 19 für das Wärmeträgeröl hinterlegten und das volumenbezogene Temperaturverhalten des Wärmeträgeröls betreffenden Daten für den Endzeitpunkt des Differenzzeitraums ein momentanes Soll-Betriebsvolumen $V_{nI}$, $V_{nII}$, $V_{nIII}$, $V_{nI}$, $V_{rV}$ des Wärmeträgeröls in dem jeweiligen Teilsystem I, II, III, IV, V. Durch die Soll-Betriebsvolumen-Vergleichseinheiten der Soll-Betriebsvolumen-Vergleichseinrichtung (23) werden für jedes Teilsystem I, II, III, IV, V durch Vergleich des momentanen Soll-Betriebsvolumens $V_{nI}$, $V_{nII}$, $V_{nIII}$, $V_{nIV}$, $V_{nV}$ mit dem jeweils zugeordneten momentanen Bezugsvolumen $V_{rI}$, $V_{rII}$, $V_{rIII}$, $V_{rIV}$, $V_{rV}$ eine jeweilige Soll-Volumenänderung $\dot{V}_{nI}$, $\dot{V}_{nII}$, $\dot{V}_{nIII}$, $\dot{V}_{nIV}$, $\dot{V}_{nV}$ für den Differenzzeitraum ermittelt. Zum Beispiel für das Teilsystem I gilt:

$$\dot{V}_{nI} = V_{nI} - V_{rI} = V_{rI} \cdot \Delta T_I \cdot \beta$$

mit: $\quad \dot{V}_{nI}$: $\quad$ Soll-Volumenänderung des Wärmeträgeröls für den Differenzzeitraum in Teilsystem I,

$V_{nI}$: $\quad$ momentanes Soll-Betriebsvolumen des Wärmeträgeröls am Ende des Differenzzeitraums,

$V_{rI}$: $\quad$ momentanes Bezugsvolumen des Wärmeträgeröls am Anfang des Differenzzeitraums,

$\Delta T_I$: $\quad$ Temperaturdifferenz zwischen den Temperaturen des Wärmeträgeröls am Anfang und am Ende des Differenzzeitraums und

$\beta$: $\quad$ Volumenausdehnungskoeffizient des Wärmeträgeröls in dem Temperaturbereich zwischen den Temperaturen des Wärmeträgeröls am Anfang und am Ende des Differenzzeitraums.

Die Soll-Volumenänderungen $\dot{V}_{nI}$, $\dot{V}_{nII}$, $\dot{V}_{nIII}$, $\dot{V}_{nIV}$, $\dot{V}_{nV}$ der einzelnen Teilsysteme I, II, III, IV; V werden schließlich von der Additionseinrichtung der Volumenänderungs-Vergleichseinrichtung 24 zu der für den Differenzzeitraum an sich zu erwartenden Soll-Volumenänderung $\dot{V}_n$ des Wärmeträgeröls der gesamten Wärmeträgerölanlage 1 aufsummiert.

Die Soll-Volumenänderung $\dot{V}_n$ des Wärmeträgeröls gibt an, um welchen Volumenbetrag das momentane Betriebsvolumen des Wärmeträgeröls am Ende des Differenzzeitraums sich bei regulärem Zustand, d.h. bei Leckagefreiheit der Wärmeträgerölanlage 1, von dem zu Beginn des Differenzzeitraums vorliegenden Bezugsvolumen $V_r$ des Wärmeträgeröls unterscheiden muss, im vorliegenden Fall um welchen Volumenbetrag das momentane Betriebsvolumen des Wärmeträgeröls am Ende des Differenzzeitraums größer sein muss als das Bezugsvolumen des Wärmeträgeröls zu Beginn des Differenzzeitraums.

Die auf die vorstehende Art und Weise berechnete Soll-Volumenänderung $\dot{V}_n$ des Wärmeträgeröls für den Differenzzeitraum wird in der Volumenänderungs-Vergleichseinrichtung 24 verglichen mit einer tatsächlichen Volumenänderung $\dot{V}_a$ des in der Wärmeträgerölanlage 1 enthaltenen Wärmeträgeröls während des Differenzzeitraums.

Durch diesen Vergleich wird geprüft, ob die Wärmeträgerölanlage 1 leckagefrei ist oder nicht.

Die tatsächliche Volumenänderung $\dot{V}_a$ des in der Wärmeträgerölanlage 1 enthaltenen Wärmeträgeröls während des Differenzzeitraums wird durch Volumenstrommessung an der Ausdehnungsleitung 10 der Wärmeträgerölanlage 1 ermittelt. Zu diesem Zweck wird die Volumenstrom-Messeinrichtung 12 genutzt, die folglich eine Volumenänderungs-Messeinrichtung darstellt.

Das in der Wärmeträgerölanlage 1 enthaltene Wärmeträgeröl weist zu Beginn des Differenzzeitraums (erster Zeitpunkt) bei der ersten Temperatur $T_1$ das momentane Bezugsvolumen $V_r$ auf, das sich in guter Näherung als Summe der momentanen Bezugsvolumina $V_{rI}$, $V_{rII}$, $V_{rIII}$, $V_{rIV}$, $V_{rV}$ der Teilsysteme I, II, III, IV, V ergibt. An dem Ausdehnungsgefäß 11 erzeugt das Bezugsvolumen $V_r$ einen in Figur 1 gestrichelt angedeuteten Füllstand $L_r$. Am Ende des Differenzzeitraums (zweiter Zeitpunkt) hat sich die Temperatur des in der Wärmeträgerölanlage 1 enthaltenen Wärmeträgeröls in dem dargestellten Beispielsfall von der ersten Temperatur $T_1$ auf die zweite Temperatur $T_2$ erhöht. Mit der Temperaturerhöhung geht eine Vergrößerung des Volumens des in der Wärmeträgerölanlage 1 enthaltenen Wärmeträgeröls von dem momentanen Bezugsvolumen $V_r$ auf ein tatsächliches momentanes Betriebsvolumen $V_a$ einher. An dem Ausdehnungsgefäß 11 der Wärmeträgerölanlage 1 äußert sich das tatsächliche momentane Betriebsvolumen $V_a$ in dem in Figur 1 mit einer ausgezogenen Linie angedeuteten Füllstand $L_a$.

Mit dem Übergang von dem Füllstand $L_r$ zu dem Füllstand $L_a$ an dem Ausdehnungsgefäß 11 ist für die Dauer des Differenzzeitraums ein Volumenstrom in der Ausdehnungsleitung 10 verbunden. Dieser Volumenstrom wird mittels der Volumenstrom-Messeinrichtung 12 gemessen und entspricht unmittelbar der tatsächlichen Volumenänderung $\dot{V}_a$ des in der Wärmeträgerölanlage 1 enthaltenen Wärmeträgeröls während des Differenzzeitraums.

Die tatsächliche Volumenänderung $\dot{V}_a$ des Wärmeträgeröls gibt an, um welchen Volumenbetrag ein in der Wärmeträgerölanlage am Ende des Differenzzeitraums tatsächlich enthaltenes und durch Volumenstrommessung ermitteltes momentanes Betriebsvolumen $V_a$ des die momentane Betriebstemperatur $T_2$ aufweisenden Wärmeträgeröls sich von dem die momentane Betriebstemperatur $T_1$ aufweisende Bezugsvolumen $V_r$ des Wärmeträgeröls zu Beginn des Differenzzeitraums unterscheidet.

Die an der Volumenstrom-Messeinrichtung 12 bestimmte tatsächliche Volumenänderung $\dot{V}_a$ wird ebenso wie

die berechnete Soll-Volumenänderung $\dot{V}_n$ an die Volumenänderungs-Vergleichseinrichtung 24 der SPS 19 übermittelt. Dort wird eine Volumenänderungs-Abweichung $\Delta\dot{V}$ bestimmt zu:

$$\Delta\dot{V} = \dot{V}_n - \dot{V}_a$$

mit:     $\Delta\dot{V}$:       Volumenänderungs-Abweichung,

         $\dot{V}_n$:       Soll-Volumenänderung des Wärmeträgeröls für den Differenzzeitraum und

         $\dot{V}_a$:       tatsächliche Volumenänderung des Wärmeträgeröls während des Differenzzeitraums.

Ergibt sich $\Delta\dot{V}$ zu Null, so bedeutet dies, dass das am Ende des Differenzzeitraums in der Wärmeträgerölanlage 1 tatsächlich enthaltene Betriebsvolumen $V_a$ des Wärmeträgeröls sich um exakt denjenigen Volumenbetrag gegenüber dem Bezugsvolumen $V_r$ des Wärmeträgeröls geändert hat, um den es sich aufgrund der Temperaturerhöhung $\Delta T$ des Wärmeträgeröls von der ersten Temperatur $T_1$ auf die zweite Temperatur $T_2$ ändern musste. Eine Volumenänderungs-Abweichung $\Delta\dot{V}$ von Null indiziert folglich eine Leckagefreiheit der Wärmeträgerölanlage 1.

Eine Leckagefreiheit der Wärmeträgerölanlage 1 wird in dem dargestellten Beispielsfall auch dann noch angenommen, wenn die momentane Volumenänderungs-Abweichung $\Delta\dot{V}$ von Null verschieden, dabei aber immer noch kleiner ist als ein Volumenänderungs-Abweichungsgrenzwert $\Delta\dot{V}_1$. Durch die Zulassung einer gewissen Bandbreite für die Volumenänderungs-Abweichung $\Delta\dot{V}$ wird berücksichtigt, dass bei der Ermittlung der Volumenänderungs-Abweichung $\Delta\dot{V}$ und der dieser zugrundeliegenden Soll-Volumenänderung $\dot{V}_n$ sowie der tatsächlichen Volumenänderung $\dot{V}_a$ des Wärmeträgeröls Messungenauigkeiten und Berechnungsfehler auftreten können.

Nur wenn die Volumenänderungs-Abweichung $\Delta\dot{V}$ den Volumenänderungs-Abweichungsgrenzwert $\Delta\dot{V}_1$ übersteigt, wird vorliegend von einer Leckage der Wärmeträgerölanlage 1 ausgegangen.

Die Leckage ebenso wie die Leckagefreiheit der Wärmeträgerölanlage 1 wird von einer numerischen Auswerteeinrichtung 25 der SPS 19 festgestellt. Die Auswerteeinrichtung 25 ist einerseits an die Volumenänderungs-Vergleichseinrichtung 24 und andererseits an eine numerische Steuereinrichtung 26 der SPS 19 angebunden. Die Steuereinrichtung 26 wiederum steht mit der Wärmeträgerpumpe 3 der Wärmeträgerölversorgung des Wärmeträger-Versorgungskreislaufs 2 und außerdem mit einer Alarmeinrichtung 27 in der Steuerwarte der Wärmeträgerölanlage 1 in Verbindung.

Stellt die Auswerteeinrichtung 25 eine Leckage der Wärmeträgerölanlage 1 fest, so sendet sie ein Signal an die Steuereinrichtung 26, aufgrund dessen die Steuereinrichtung 26 die Wärmeträgerpumpe 3 stillsetzt und die Alarmeinrichtung 27 zur Abgabe eines Alarmsignals betätigt.

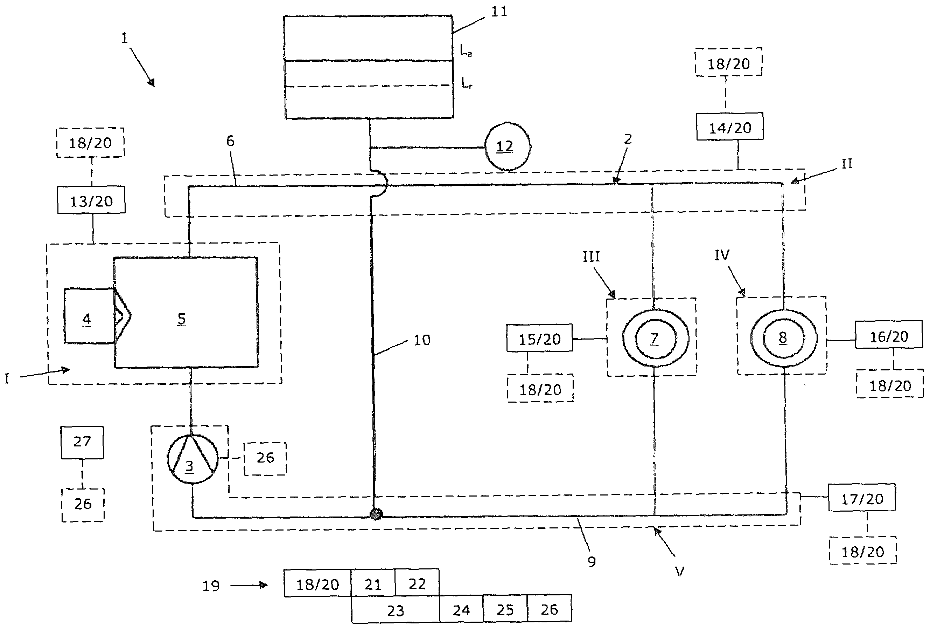

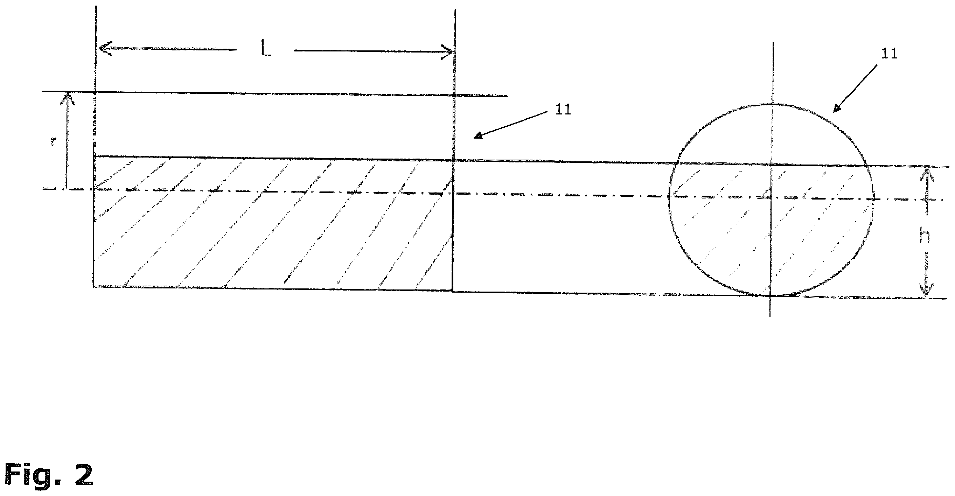

Alternativ besteht die Möglichkeit, die tatsächliche momentane Volumenänderung $\dot{V}_a$ des in der Wärmeträgerölanlage 1 enthaltenen Wärmeträgeröls über den Füllstand des Ausdehnungsgefäßes 11 zu bestimmen. In Figur 2 ist die Füllhöhe des Ausdehnungsgefäßes 11 mit h bezeichnet.

Das Wärmeträgerölvolumen V des in dem Ausdehnungsgefäß 11 anstehenden Wärmeträgeröls ergibt sich damit zu

$$V = L \cdot r^2 \cdot \arccos\left(\frac{r-h}{r}\right) - (r-h)\sqrt{2rh - h^2}$$

Nach dieser Formel wird zunächst das Wärmeträgerölvolumen V in dem Ausdehnungsgefäß 11 zu Beginn des Differenzzeitraums ermittelt. Am Ende des Differenzzeitraums, wenn sich die Temperatur des Wärmeträgeröls von $T_1$ auf $T_2$ erhöht hat, wird dann nach derselben Formel erneut das Wärmeträgerölvolumen V in dem Ausdehnungsgefäß 11 berechnet, wobei sich die Füllhöhe h des Ausdehnungsgefäßes 11 verändert, vorliegend vergrößert hat. Die Differenz aus den beiden ermittelten Wärmeträgerölvolumina in dem Ausdehnungsgefäß 11 gibt die tatsächliche Volumenänderung $\dot{V}_a$ während des Differenzzeitraums an, die schließlich in der vorstehend beschriebenen Weise eine der Grundlagen für die sich anschließende Ermittlung der Volumenänderungs-Abweichung $\Delta\dot{V}$ bildet.

**Patentansprüche**

1. Wärmeträgerölanlage (1), die Wärmeträgeröl enthält, das bei einer ersten Temperatur ($T_1$) und zu einem ersten Zeitpunkt ein momentanes Bezugsvolumen ($V_r$) bildet und das bei Betrieb der Wärmeträgerölanlage (1) bei einer zweiten Temperatur ($T_2$) und zu einem gegenüber dem ersten Zeitpunkt um einen Differenzzeitraum zeitlich versetzten zweiten Zeitpunkt ein tatsächliches momentanes Betriebsvolumen ($V_a$) bildet, **dadurch gekennzeichnet,**

• **dass** eine Volumenänderungs-Messeinrichtung (12) vorgesehen ist, die eine Volumenstrom-Messeinrichtung aufweist, welche eine über den Differenzzeitraum auftretende tatsächliche Volumenänderung ($\dot{V}_a$) zwischen dem momentanen Bezugsvolumen ($V_r$) und dem tatsächlichen momentanen Betriebsvolumen ($V_a$) des Wärmeträgeröls bestimmt, indem die Volumenstrom-Messeinrichtung den über den Differenzzeitraum auftretenden Volumenstrom des Wärmeträgeröls in einer Leitung der Wärmeträgerölanlage (1) bestimmt,

• **dass** eine Temperatur-Messeinrichtung (20) vorgesehen ist, welche eine Temperaturdifferenz ($\Delta T$) zwischen der ersten Temperatur ($T_1$) und der zweiten Temperatur ($T_2$) des Wärmeträgeröls bestimmt,

• **dass** eine an die Temperatur-Messeinrichtung (20) angebundene Soll-Betriebsvolumen-Berechnungseinrichtung (21) vorgesehen ist, welche anhand des momentanen Bezugsvolumens ($V_r$) und der bestimmten Temperaturdifferenz ($\Delta T$) des Wärmeträgeröls ein dem zweiten Zeitpunkt zugeordnetes momentanes Soll-Betriebsvolumen ($V_n$) des Wärmeträgeröls bestimmt,

• **dass** eine an die Soll-Betriebsvolumen-Berechnungseinrichtung (21) angebundene Soll-Betriebsvolumen-Vergleichseinrichtung (23) vorgesehen ist, welche durch Vergleichen des momentanen Bezugsvolumens ($V_r$) des Wärmeträgeröls und des momentanen Soll-Betriebsvolumens ($V_n$) des Wärmeträgeröls eine Soll-Volumenänderung ($\dot{V}_n$) des Wärmeträgeröls für den Differenzzeitraum ermittelt,

• **dass** eine Volumenänderungs-Vergleichseinrichtung (24) vorgesehen ist, welche an die eine Volumenstrom-Messeinrichtung aufweisende Volumenänderungs-Messeinrichtung (12) und an die Soll-Betriebsvolumen-Vergleichseinrichtung (23) angebunden ist und welche die tatsächliche Volumenänderung ($\dot{V}_a$) des Wärmeträgeröls und die Soll-Volumenänderung ($\dot{V}_n$) des Wärmeträgeröls miteinander vergleicht und

• **dass** eine an die Volumenänderungs-Vergleichseinrichtung (24) angebundene Auswerteeinrichtung (25) vorgesehen ist, weiche eine Leckage der Wärmeträgerölanlage (1) feststellt, sofern sich die tatsächliche Volumenänderung ($\dot{V}_a$) des Wärmeträgeröls von der Soll-Volumenänderung ($\dot{V}_n$) des Wärmeträgeröls durch eine Volumenänderungs-Abweichung ($\Delta \dot{V}$) unterscheidet, die eine Leckage der Wärmeträgerölanlage (1) indiziert.

2. Wärmeträgerölanlage nach Anspruch 1, **dadurch gekennzeichnet, dass** die Auswerteeinrichtung (25) eine Leckage der Wärmeträgerölanlage (1) feststellt, sofern sich die tatsächliche Volumenänderung ($\dot{V}_a$) von der Soll-Volumenänderung ($\dot{V}_n$) durch eine Volumenänderungs-Abweichung ($\Delta \dot{V}$) unterscheidet, die betragsmäßig größer ist als ein von null verschiedener Volumenänderungs-Abweichungsgrenzwert ($\Delta \dot{V}_1$).

3. Wärmeträgerölanlage nach einem der vorhergehenden Ansprüche, **dadurch gekennzeichnet, dass** die Auswerteeinrichtung (25) an eine Steuereinrichtung (26) der Wärmeträgerölanlage (1) angebunden ist, welche aufgrund der Feststellung einer Leckage der Wärmeträgerölanlage (1) durch die Auswerteeinrichtung (25) eine Funktionseinheit der Wärmeträgerölanlage (1) zur leckagespezifischen Regelung der Wärmeträgerölanlage (1) ansteuert.

4. Wärmeträgerölanlage nach Anspruch 3, **dadurch gekennzeichnet, dass** die Steuereinrichtung (26) der Wärmeträgerölanlage (1) aufgrund der Feststellung einer Leckage der Wärmeträgerölanlage (1) durch die Auswerteeinrichtung (25) als Funktionseinheit der Wärmeträgerölanlage (1) eine Wärmeträgerölversorgung zur leckagespezifischen Regelung der Wärmeträgerölanlage (1) ansteuert, vorzugsweise abschaltet.

5. Wärmeträgerölanlage nach einem der vorhergehenden Ansprüche, **dadurch gekennzeichnet, dass** die Volumenstrom-Messeinrichtung die tatsächliche Volumenänderung ($\dot{V}_a$) des Wärmeträgeröls durch Messung eines Volumenstroms des Wärmeträgeröls in einer Ausdehnungsleitung (10) der Wärmeträgerölanlage (1) bestimmt, wobei die Ausdehnungsleitung (10) zu einem Ausdehnungsgefäß (11) der Wärmeträgerölanlage (1) führt.

6. Wärmeträgerölanlage nach einem der vorhergehenden Ansprüche, **dadurch gekennzeichnet, dass** die Volumenänderungs-Messeinrichtung zusätzlich zu der Volumenstrom-Messeinrichtung eine Füllstands-Messeinrichtung sowie eine Ist-Volumenvergleichseinrichtung aufweist und dass die Füllstands-Messeinrichtung die tatsächliche Volumenänderung ($\dot{V}_a$) des in der Wärmeträgerölanlage (1) enthaltenen Wärmeträgeröls ergänzend bestimmt, indem die Füllstands-Messeinrichtung das tatsächliche momentane Betriebsvolumen ($V_a$) des in der Wärmeträgerölanlage (1) enthaltenen Wärmeträgeröls durch Messung eines dem zweiten Zeitpunkt zugeordneten Füllstands des Wärmeträgeröls in der Wärmeträgerölanlage (1) bestimmt und die Ist-Volumenvergleichseinrichtung das mittels der Füllstands-Messeinrichtung bestimmte tatsächliche momentane Betriebsvolumen ($V_a$) des Wärmeträgeröls mit dem Bezugsvolumen ($V_r$) des Wärmeträgeröls vergleicht.

7. Wärmeträgerölanlage nach Anspruch 6, **dadurch gekennzeichnet, dass** die Füllstands-Messeinrichtung das tatsächliche momentane Betriebsvolumen ($V_a$) des Wärmeträgeröls durch Messung des Füllstands des Wärmeträgeröls in einem Ausdehnungsgefäß (11) der Wärmeträgerölanlage (1) bestimmt.

8. Wärmeträgerölanlage nach einem der vorhergehenden Ansprüche, **dadurch gekennzeichnet, dass** die Wärmeträgerölanlage (1) mehrere Anlagenteile (I, II, III, IV, V) aufweist, von denen jeder

- eine Temperatur-Messeinheit (13, 14, 15, 16, 17) der Temperatur-Messeinrichtung (20),
- eine an die jeweilige Temperatur-Messeinheit (13, 14, 15, 16, 17) angebundene Soll-Betriebsvolumen-Berechnungseinheit der Soll-Betriebsvolumen-Berechnungseinrichtung (21) sowie
- eine an die jeweilige Soll-Betriebsvolumen-Berechnungseinheit angebundene Soll-Betriebsvolumen-Vergleichseinheit der Soll-Betriebsvolumen-Vergleichseinrichtung (23)

aufweist, wobei

- jede der Temperatur-Messeinheiten die in dem betreffenden Anlagenteil (I, II, III, IV, V) auftretende Temperaturdifferenz ($\Delta T_I$, $\Delta T_{II}$, $\Delta T_{III}$, $\Delta T_{IV}$, $\Delta T_V$) des in diesem Anlagenteil (I, II, III, IV, V) enthaltenen Wärmeträgeröls bestimmt,
- jede der Soll-Betriebsvolumen-Berechnungseinheiten anhand des momentanen Bezugsvolumens ($V_{rI}$, $V_{rII}$, $V_{rIII}$, $V_{rIV}$, $V_{rV}$) des in dem betreffenden Anlagenteil (I, II, III, IV, V) enthaltenen Wärmeträgeröls und anhand der in dem betreffenden Anlagenteil (I, II, III, IV, V) auftretenden Temperaturdifferenz ($\Delta T_I$, $\Delta T_{II}$, $\Delta T_{III}$, $\Delta T_{IV}$, $\Delta T_V$) des in diesem Anlagenteil (I, II, III, IV, V) enthaltenen Wärmeträgeröls ein dem zweiten Zeitpunkt zugeordnetes momentanes Soll-Betriebsvolumen ($V_{nI}$, $V_{nII}$, $V_{nIII}$, $V_{nIV}$, $V_{nV}$) des Wärmeträgeröls dieses Anlagenteils (I, II, III, IV, V) bestimmt,
- jede der Soll-Betriebsvolumen-Vergleichseinheiten durch Vergleichen des momentanen Bezugsvolumens ($V_{rI}$, $V_{rII}$, $V_{rIII}$, $V_{rIV}$, $V_{rV}$) des in dem betreffenden Anlagenteil (I, II, III, IV, V) enthaltenen Wärmeträgeröls und des momentanen Soll-Betriebsvolumens ($V_{nI}$, $V_{nII}$, $V_{nIII}$, $V_{nIV}$, $V_{nV}$) des Wärmeträgeröls dieses Anlagenteils (I, II, III, IV, V) eine in diesem Anlagenteil (I, II, III, IV, V) über den Differenzzeitraum auftretende Soll-Volumenänderung ($\dot{V}_{nI}$, $\dot{V}_{nII}$, $\dot{V}_{nIII}$, $\dot{V}_{nIV}$, $\dot{V}_{nV}$) des Wärmeträgeröls ermittelt und wobei
- eine Additionseinrichtung vorgesehen ist, welche die Soll-Volumenänderung ($\dot{V}_n$) des Wärmeträgeröls in der Wärmeträgerölanlage (1) als Summe der Soll-Volumenänderungen ($\dot{V}_{nI}$, $\dot{V}_{nII}$, $\dot{V}_{nIII}$, $\dot{V}_{nIV}$, $\dot{V}_{nV}$) des Wärmeträgeröls in den Anlagenteilen (I, II, III, IV, V) bestimmt.

9. Verfahren zur Leckageerkennung an einer Wärmeträgerölanlage (1) nach einem der vorhergehenden Ansprüche, **dadurch gekennzeichnet,**

- **dass** durch eine Volumenänderungs-Messung in Form einer Volumenstrommessung eine über den Differenzzeitraum auftretende tatsächliche Volumenänderung ($V_a$) zwischen dem momentanen Bezugsvolumen ($V_r$) und dem tatsächlichen momentanen Betriebsvolumen ($V_a$) des Wärmeträgeröls bestimmt wird,
- **dass** durch eine Temperatur-Messung eine Temperaturänderung ($\Delta T$) zwischen der ersten Temperatur ($T_1$) und der zweiten Temperatur ($T_2$) des Wärmeträgeröls bestimmt wird,
- **dass** anhand des momentanen Betriebsvolumens ($V_r$) und der bestimmten Temperaturänderung ($\Delta T$) des Wärmeträgeröls ein dem zweiten Zeitpunkt zugeordnetes momentanes Soll-Betriebsvolumen ($V_n$) des Wärmeträgeröls bestimmt wird,
- **dass** durch Vergleichen des momentanen Bezugsvolumens ($V_r$) des Wärmeträgeröls und des momentanen Soll-Betriebsvolumens ($V_n$) des Wärmeträgeröls eine Soll-Volumenänderung ($\dot{V}_n$) des Wärmeträgeröls für den Differenzzeitraum ermittelt wird,
- **dass** die durch Volumenstrommessung bestimmte tatsächliche Volumenänderung ($\dot{V}_a$) des Wärmeträgeröls und die Soll-Volumenänderung ($\dot{V}_n$) des Wärmeträgeröls miteinander verglichen werden und
- **dass** eine Leckage der Wärmeträgerölanlage (1) festgestellt wird, sofern der Vergleich der tatsächlichen Volumenänderung ($\dot{V}_a$) des Wärmeträgeröls und der Soll-Volumenänderung ($\dot{V}_n$) des Wärmeträgeröls ergibt, dass sich die tatsächliche Volumenänderung ($\dot{V}_a$) des Wärmeträgeröls von der Soll-Volumenänderung ($\dot{V}_n$) des Wärmeträgeröls durch eine Volumenänderungs-Abweichung ($\Delta \dot{V}$) unterscheidet, die eine Leckage der Wärmeträgerölanlage (1) indiziert.

**Claims**

1. Thermal oil system (1) containing thermal oil, which forms a momentary reference volume ($V_r$) at a first temperature ($T_1$) and a first point in time and forms an actual momentary operating volume ($V_a$) during operation of the thermal oil system (1) at a second temperature ($T_2$) and a second point in time that is temporally offset from the first point in time by a differential time period, **characterised**

- **in that** a volumetric change measuring device (12) is provided which comprises a volumetric flow rate measuring device that determines an actual volumetric change ($V_a$) occurring over the differential time period between the momentary reference volume ($V_r$) and the actual momentary operating volume ($V_a$) of the thermal oil by the volumetric flow rate measuring device determining the volumetric flow rate of the thermal oil occurring over the differential time period in a line of the thermal oil system (1),

• **in that** a temperature measuring device (20) is provided which determines a temperature difference ($\Delta T$) between the first temperature ($T_1$) and the second temperature ($T_2$) of the thermal oil,

• **in that** a target operating volume calculation device (21) connected to the temperature measuring device (20) is provided which, on the basis of the momentary reference volume ($V_r$) and the determined temperature difference ($\Delta T$) of the thermal oil, determines a momentary target operating volume ($V_n$) of the thermal oil, associated with the second point in time,

• **in that** a target operating volume comparison device (23) connected to the target operating volume calculation device (21) is provided which determins a target volumetric change ($V_n$) of the thermal oil for the differential time period by comparing the momentary reference volume ($V_r$) of the thermal oil and the momentary target operating volume ($V_n$) of the thermal oil,

• **in that** a volumetric change comparison device (24) is provided which is connected to the volumetric change measuring device (12) comprising a volumetric flow rate measuring device and to the target operating volume comparison device (23), and compares the actual volumetric change ($V_a$) of the thermal oil and the target volumetric change ($V_n$) of the thermal oil with one another, and

• **in that** an evaluation device (25) connected to the volumetric change comparison device (24) is provided which detects a leak in the thermal oil system (1) if the actual volumetric change ($V_a$) of the thermal oil differs from the target volumetric change ($\dot{V}_n$) of the thermal oil by a volumetric change difference ($\Delta \dot{V}$) that indicates a leak in the thermal oil system (1).

2. Thermal oil system according to claim 1, **characterised in that** the evaluation device (25) detects a leak in the thermal oil system (1) if the actual volumetric change ($V_a$) differs from the target volumetric change ($\dot{V}_n$) by a volumetric change difference ($\Delta \dot{V}$) that is greater in amount than a volumetric change difference threshold value ($\Delta \dot{V}_l$) that is not zero.

3. Thermal oil system according to any one of the preceding claims, **characterised in that** the evaluation device (25) is connected to a control device (26) of the thermal oil system (1) which activates a functional unit of the thermal oil system (1) in order to control the thermal oil system (1) in a leak-specific manner on the basis of the evaluation device (25) determining a leak in the thermal oil system (1).

4. Thermal oil system according to claim 3, **characterised in that** the control device (26) of the thermal oil system (1) activates, preferably disconnects, a thermal oil supply as the functional unit of the thermal oil system (1) in order to control the thermal oil system (1) in a leak-specific manner on the basis of the evaluation device (25) determining a leak in the thermal oil system (1).

5. Thermal oil system according to any one of the preceding claims, **characterised in that** the volumetric flow rate measuring device determines the actual volumetric change ($V_a$) of the thermal oil by measuring a volumetric flow rate of the thermal oil in an expansion line (10) of the thermal oil system (1), the expansion line (10) leading to an expansion vessel (11) of the thermal oil system (1).

6. Thermal oil system according to any one of the preceding claims, **characterised in that** the volumetric change measuring device comprises a fill level measuring device and an actual volume comparison device in addition to the volumetric flow rate measuring device, and **in that** the fill level measuring device additionally determines the actual volumetric change ($V_a$) of the thermal oil contained in the thermal oil system (1) by the fill level measuring device determining the actual momentary operating volume ($V_a$) of the thermal oil contained in the thermal oil system (1) by measuring a fill level of the thermal oil, associated with the second point in time, in the thermal oil system (1), and by the actual volume comparison device comparing the actual momentary operating volume ($V_a$) of the thermal oil determined by means of the fill level measuring device with the reference volume ($V_r$) of the thermal oil.

7. Thermal oil system according to claim 6, **characterised in that** the fill level measuring device determines the actual momentary operating volume ($V_a$) of the thermal oil by measuring the fill level of the thermal oil in an expansion vessel (11) of the thermal oil system (1).

8. Thermal oil system according to any one of the preceding claims, **characterised in that** the thermal oil system (1) comprises a plurality of system parts (I, II, III, IV, V), each of which comprises

EP 2 837 924 B1

• a temperature measuring unit (13, 14, 15, 16, 17) of the temperature measuring device (20),
• a target operating volume calculation unit of the target operating volume calculation device (21), connected to the relevant temperature measuring unit (13, 14, 15, 16, 17), and
• a target operating volume comparison unit of the target operating volume comparison device (23), connected to the relevant target operating volume calculation unit,
wherein
• each of the temperature measuring units determines the temperature difference ($\Delta T_I$, $\Delta T_{II}$, $\Delta T_{III}$, $\Delta T_{IV}$, $\Delta T_V$), occurring in the relevant system part (I, II, III, IV, V), in the thermal oil contained in this system part (I, II, III, IV, V),
• each of the target operating volume calculation units determines, on the basis of the momentary reference volume ($V_{rI}$, $V_{rII}$, $V_{rIII}$, $V_{rIV}$, $V_{rV}$) of the thermal oil contained in the relevant system part (I, II, III, IV, V) and on the basis of the temperature difference ($\Delta T_I$, $\Delta T_{II}$, $\Delta T_{III}$, $\Delta T_{IV}$, $\Delta T_V$), occurring in the relevant system part (I, II, III, IV, V), in the thermal oil contained in this system part (I, II, III, IV, V), a momentary target operating volume ($V_{nI}$, $V_{nII}$, $V_{nIII}$, $V_{nIV}$, $V_{nV}$) of the thermal oil in this system part (I, II, III, IV, V), associated with the second point in time,
• each of the target operating volume comparison units determins a target volumetric change ($\dot{V}_{nI}$, $\dot{V}_{nII}$, $\dot{V}_{nIII}$, $\dot{V}_{nIV}$, $\dot{V}_{nV}$) of the thermal oil that occurs in the relevant system part (I, II, III, IV, V) over the differential time period by comparing the momentary reference volume ($V_{rI}$, $V_{rII}$, $V_{rIII}$, $V_{nIV}$, $V_{rV}$) of the thermal oil contained in the relevant system part (I, II, III, IV, V) with the momentary target operating volume ($V_{nI}$, $V_{nII}$, $V_{nIII}$, $V_{nIV}$, $V_{nV}$) of the thermal oil in this system part (I, II, III, IV, V), and wherein
• an addition device is provided which determines the target volumetric change ($\dot{V}_n$) of the thermal oil in the thermal oil system (1) as the sum of the target volumetric changes ($\dot{V}_{nI}$, $\dot{V}_{nII}$, $\dot{V}_{nIII}$, $\dot{V}_{nIV}$, $\dot{V}_{nV}$) of the thermal oil in the system parts (I, II, III, IV, V).

9. Method for detecting a leak in a thermal oil system (1) according to any one of the preceding claims, **characterised**

• **in that** an actual volumetric change ($\dot{V}_a$) occurring over the differential time period between the momentary reference volume ($V_r$) and the actual momentary operating volume ($V_a$) of the thermal oil is determined by a volumetric change measurement in the form of a volumetric flow rate measurement,
• **in that** a temperature change ($\Delta T$) between the first temperature ($T_1$) and the second temperature ($T_2$) of the thermal oil is determined by a temperature measurement,
• **in that** a momentary target operating volume ($V_n$) of the thermal oil, associated with the second point in time, is determined on the basis of the momentary operating volume ($V_r$) and the determined temperature change ($\Delta T$) of the thermal oil,
• **in that** a target volumetric change ($\dot{V}_n$) in the thermal oil for the differential time period is determined by comparing the momentary reference volume ($V_r$) of the thermal oil and the momentary target operating volume ($V_n$) of the thermal oil,
• **in that** the actual volumetric change ($\dot{V}_a$) of the thermal oil determined by volumetric flow measurement and the target volumetric change ($\dot{V}_n$) of the thermal oil are compared with one another, and
• **in that** a leak in the thermal oil system (1) is detected if the comparison of the actual volumetric change ($\dot{V}_a$) of the thermal oil and the target volumetric change ($\dot{V}_n$) of the thermal oil shows that the actual volumetric change ($\dot{V}_a$) of the thermal oil differs from the target volumetric change ($\dot{V}_n$) of the thermal oil by a volumetric change difference ($\Delta \dot{V}$) that indicates a leak in the thermal oil system (1).

**Revendications**

1. Installation à huile caloporteuse (1) qui contient une huile caloporteuse qui forme un volume de référence momentané ($V_r$) à une première température ($T_1$) et à un premier instant et qui, pendant le fonctionnement de l'installation à huile caloporteuse (1), forme un volume de service effectif momentané ($V_a$) à une deuxième température ($T_2$) et à un deuxième instant décalé dans le temps d'une période différentielle par rapport au premier instant, **caractérisée en ce**

• **qu'**un dispositif de mesure de changement de volume (12) est prévu, qui présente un dispositif de mesure de débit volumique, lequel détermine un changement de volume effectif ($\dot{V}_a$) se produisant sur la période différentielle entre le volume de référence momentané ($V_r$) et le volume de service effectif momentané ($V_a$) de l'huile caloporteuse, par le fait que le dispositif de mesure de débit volumique détermine le débit volumique de l'huile caloporteuse se produisant sur la période différentielle dans une conduite de l'installation à huile caloporteuse (1),

EP 2 837 924 B1

• **qu'**un dispositif de mesure de température (20) est prévu, lequel détermine une différence de température ($\Delta T$) entre la première température ($T_1$) et la deuxième température ($T_2$) de l'huile caloporteuse,

• **qu'**un dispositif de calcul de volume de service de consigne (21) relié au dispositif de mesure de température (20) est prévu, lequel détermine, à partir du volume de référence momentané ($V_r$) et de la différence de température ($\Delta T$) déterminée de l'huile caloporteuse, un volume de service de consigne momentané ($V_n$), associé au deuxième instant, de l'huile caloporteuse,

• **qu'**un dispositif de comparaison de volumes de service de consigne (23) relié au dispositif de calcul de volume de service de consigne (21) est prévu, lequel détermine, par comparaison du volume de référence momentané ($V_r$) de l'huile caloporteuse et du volume de service de consigne momentané ($V_n$) de l'huile caloporteuse, un changement de volume de consigne ($\dot{V}_n$) de l'huile caloporteuse pour la période différentielle,

• **qu'**un dispositif de comparaison de changements de volume (24) est prévu, lequel est relié au dispositif de mesure de changement de volume (12) présentant un dispositif de mesure de débit volumique et au dispositif de comparaison de volumes de service de consigne (23) et lequel compare le changement de volume effectif ($\dot{V}_a$) de l'huile caloporteuse et le changement de volume de consigne ($\dot{V}_n$) de l'huile caloporteuse et

• **qu'**un dispositif d'évaluation (25) relié au dispositif de comparaison de changements de volume (24) est prévu, lequel détecte une fuite de l'installation à huile caloporteuse (1) si le changement de volume effectif ($\dot{V}_a$) de l'huile caloporteuse diffère du changement de volume de consigne ($\dot{V}_n$) de l'huile caloporteuse d'un écart de changement de volume ($\Delta \dot{V}$) qui indique une fuite de l'installation à huile caloporteuse (1).

2. Installation à huile caloporteuse selon la revendication 1, **caractérisée en ce que** le dispositif d'évaluation (25) détecte une fuite de l'installation à huile caloporteuse (1) si le changement de volume effectif ($\dot{V}_a$) diffère du changement de volume de consigne ($\dot{V}_n$) d'un écart de changement de volume ($\Delta \dot{V}$) qui est plus grand en valeur absolue qu'une valeur limite d'écart de changement de volume ($\Delta \dot{V}_l$) différente de zéro.

3. Installation à huile caloporteuse selon l'une des revendications précédentes, **caractérisée en ce que** le dispositif d'évaluation (25) est relié à un dispositif de commande (26) de l'installation à huile caloporteuse (1), lequel commande, sur la base de la détection d'une fuite de l'installation à huile caloporteuse (1) par le dispositif d'évaluation (25), une unité fonctionnelle de l'installation à huile caloporteuse (1) pour la régulation spécifique à la fuite de l'installation à huile caloporteuse (1).

4. Installation à huile caloporteuse selon la revendication 3, **caractérisée en ce que** le dispositif de commande (26) de l'installation à huile caloporteuse (1) commande, de préférence arrête, sur la base de la détection d'une fuite de l'installation à huile caloporteuse (1) par le dispositif d'évaluation (25), en tant qu'unité fonctionnelle de l'installation à huile caloporteuse (1), une alimentation en huile caloporteuse pour la régulation spécifique à la fuite de l'installation à huile caloporteuse (1).

5. Installation à huile caloporteuse selon l'une des revendications précédentes, **caractérisée en ce que** le dispositif de mesure de débit volumique détermine le changement de volume effectif ($\dot{V}_a$) de l'huile caloporteuse par mesure d'un débit volumique de l'huile caloporteuse dans une conduite d'expansion (10) de l'installation à huile caloporteuse (1), la conduite d'expansion (10) conduisant à un vase d'expansion (11) de l'installation à huile caloporteuse (1).

6. Installation à huile caloporteuse selon l'une des revendications précédentes, **caractérisée en ce que** le dispositif de mesure de changement de volume présente, en plus du dispositif de mesure de débit volumique, un dispositif de mesure de niveau de remplissage ainsi qu'un dispositif de comparaison de volumes réels et que le dispositif de mesure de niveau de remplissage détermine en complément le changement de volume effectif ($\dot{V}_a$) de l'huile caloporteuse contenue dans l'installation à huile caloporteuse (1), par le fait que le dispositif de mesure de niveau de remplissage détermine le volume de service effectif momentané ($V_a$) de l'huile caloporteuse contenue dans l'installation à huile caloporteuse (1) par mesure d'un niveau de remplissage de l'huile caloporteuse dans l'installation à huile caloporteuse (1) associé au deuxième instant et le dispositif de comparaison de volumes réels compare le volume de service effectif momentané ($V_a$) de l'huile caloporteuse déterminé au moyen du dispositif de mesure de niveau de remplissage avec le volume de référence ($V_r$) de l'huile caloporteuse.

7. Installation à huile caloporteuse selon la revendication 6, **caractérisée en ce que** le dispositif de mesure de niveau de remplissage détermine le volume de service effectif momentané ($V_a$) de l'huile caloporteuse par mesure du niveau de remplissage de l'huile caloporteuse dans un vase d'expansion (11) de l'installation à huile caloporteuse (1).

8. Installation à huile caloporteuse selon l'une des revendications précédentes, **caractérisée en ce que** l'installation à huile caloporteuse (1) comporte plusieurs parties d'installation (I, II, III, IV, V) dont chacune présente

• une unité de mesure de température (13, 14, 15, 16, 17) du dispositif de mesure de température (20),
• une unité de calcul de volume de service de consigne du dispositif de calcul de volume de service de consigne (21) reliée à l'unité de mesure de température (13, 14, 15, 16, 17) respective ainsi que
• une unité de comparaison de volumes de service de consigne du dispositif de comparaison de volumes de service de consigne (23) reliée à l'unité de calcul de volume de service de consigne respective, sachant que

• chacune des unités de mesure de température détermine la différence de température ($\Delta T_I$, $\Delta T_{II}$, $\Delta T_{III}$, $\Delta T_{IV}$, $\Delta T_V$) de l'huile caloporteuse contenue dans la partie d'installation concernée (I, II, III, IV, V) se produisant dans cette partie d'installation (I, II, III, IV, V),
• chacune des unités de calcul de volume de service de consigne détermine, à partir du volume de référence momentané ($Vr_I$, $Vr_{II}$, $Vr_{III}$, $V_{rIV}$, $Vr_V$) de l'huile caloporteuse contenue dans la partie d'installation concernée (I, II, III, IV, V) et à partir de la différence de température ($\Delta T_I$, $\Delta T_{II}$, $\Delta T_{III}$, $\Delta T_{IV}$, $\Delta_{TV}$) de l'huile caloporteuse contenue dans la partie d'installation concernée (I, II, III, IV, V) se produisant dans cette partie d'installation (I, II, III, IV, V), un volume de service de consigne momentané ($Vn_I$, $Vn_{II}$, $Vn_{III}$, $Vn_{IV}$, $Vn_V$) de l'huile caloporteuse de cette partie d'installation (I, II, III, IV, V) associé au deuxième instant,
• chacune des unités de comparaison de volumes de service de consigne détermine, par comparaison du volume de référence momentané ($Vr_I$, $Vr_{II}$, $Vr_{III}$, $Vr_{IV}$, $Vr_V$) de l'huile caloporteuse contenue dans la partie d'installation concernée (I, II, III, IV, V) et du volume de service de consigne momentané ($Vn_I$, $Vn_{II}$, $V_{nIII}$, $Vn_{IV}$, $Vn_V$) de l'huile caloporteuse de cette partie d'installation (I, II, III, IV, V), un changement de volume de consigne ($\dot{V}n_I$, $\dot{V}n_{II}$, $\dot{V}n_{III}$, $\dot{V}n_{IV}$, $\dot{V}n_V$) de l'huile caloporteuse dans cette partie d'installation (I, II, III, IV, V) se produisant sur la période différentielle et
• un dispositif d'addition étant prévu, lequel détermine le changement de volume de consigne ($\dot{V}n$) de l'huile caloporteuse dans l'installation à huile caloporteuse (1) en tant que somme des changements de volume de consigne ($\dot{V}n_I$, $\dot{V}n_{II}$, $\dot{V}n_{III}$, $\dot{V}n_{IV}$, $\dot{V}n_V$) de l'huile caloporteuse dans les parties d'installation (I, II, III, IV, V).

9. Procédé de détection d'une fuite sur une installation à huile caloporteuse (1) selon l'une des revendications précédentes, **caractérisé en ce**

• **qu'**un changement de volume effectif ($\dot{V}a$) entre le volume de référence momentané ($V_r$) et le volume de service effectif momentané ($V_a$) de l'huile caloporteuse se produisant sur la période différentielle est déterminé par une mesure de changement de volume sous la forme d'une mesure de débit volumique,
• **qu'**un changement de température ($\Delta T$) entre la première température ($T_1$) et la deuxième température ($T_2$) de l'huile caloporteuse est déterminé par une mesure de température,
• **qu'**un volume de service de consigne momentané ($V_n$) de l'huile caloporteuse associé au deuxième instant est déterminé à partir du volume de service momentané ($V_r$) et du changement de température ($\Delta T$) déterminé de l'huile caloporteuse,
• **qu'**un changement de volume de consigne ($\dot{V}_n$) de l'huile caloporteuse pour la période différentielle est déterminé par comparaison du volume de référence momentané ($V_r$) de l'huile caloporteuse et du volume de service de consigne momentané ($V_n$) de l'huile caloporteuse,
• **que** le changement de volume effectif ($\dot{V}_a$) de l'huile caloporteuse déterminé par mesure de débit volumique et le changement de volume de consigne ($\dot{V}_n$) de l'huile caloporteuse sont comparés entre eux et
• **qu'**une fuite de l'installation à huile caloporteuse (1) est détectée si la comparaison du changement de volume effectif ($\dot{V}_a$) de l'huile caloporteuse et du changement de volume de consigne ($\dot{V}_n$) de l'huile caloporteuse donne pour résultat que le changement de volume effectif ($\dot{V}_a$) de l'huile caloporteuse diffère du changement de volume de consigne ($\dot{V}_n$) de l'huile caloporteuse d'un écart de changement de volume ($\Delta\dot{V}$) qui indique une fuite de l'installation à huile caloporteuse (1).

Fig. 2

EP 2 837 924 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010043478 A1
- DE 102009048062 A1
- US 5686658 A
- US 2007028674 A1
- US 20070028674 A1